# EUROPÄISCHE PATENTANMELDUNG

(11) **EP 0 644 044 A1**
(43) Veröffentlichungstag der Anmeldung: **22.03.1995**
(21) Anmeldenummer: 94113435.5
(22) Anmeldetag: 29.08.1994
(51) Int. Cl.: B32B 9/04, B65D 65/46

(54) **Verpackungsmaterial sowie Verfahren zu dessen Herstellung**

(30) Priorität: 21.09.1993 DE 4332081
(71) Anmelder: EMPE-WERKE Ernst Pelz GmbH & Co. KG, D-82532 Geretsried (DE)
(72) Erfinder: Froschmeier, Markus, D-81667 München (DE); Gardill, Rainer, Dr., D-83677 Reichersbeuern (DE)
(74) Vertreter: Goddar, Heinz J., Dr.

(57) **Zusammenfassung**

Verpackungsmaterial mit einer flächigen, polsternden Innenschicht (10) aus Naturfaservlies und zwei diese beidseits abdeckenden Abdecklagen (12,14), dadurch gekennzeichnet, daß die Abdecklagen aus Deckfolien aus biologisch im wesentlichen vollständig abbaubarem Material bestehen sowie Verfahren zur Herstellung eines derartigen Verpackungsmaterials.

## Beschreibung

Die Erfindung betrifft ein Verpackungsmaterial mit einer flächigen, polsternden Innenschicht aus Naturfaservlies und zwei diese beidseits abdeckenden Abdecklagen sowie ein Verfahren zur Herstellung eines derartigen Verpackungsmaterials.

Verpackungsmaterialien der vorstehend beschriebenen Art werden bislang in der Weise aufgebaut, daß das als Polster- und Isolierschicht dienende lockere Naturfaservlies beidseits mit je einer Papierbahn vernaht wird. Das verwendete Papier ist ebenso wie das Naturfaservlies zwar bilogisch abbaubar, jedoch ist das verwendete Papier nicht in der Lage, das Naturfaservlies gegen Eindringen von Feuchtigkeit zu schützen oder durch das Naturfaservlies nicht aufnehmbare Zugkräfte zu tragen, so daß die Beständigkeit und Festigkeit derartiger Verpackungsmaterialien zu wünschen läßt. Außerdem ist die Herstellung eines Verpackungsmaterials der vorstehend beschriebenen Art verhältnismäßig aufwendig, weil, wie dargelegt, ein Vernähen des Naturfaservlieses mit den Papierbahnen notwendig ist.

Auch die Herstellung von Verpackungsmaterialien, bei denen die polsternde Innenschicht aus einer polsternden Welle besteht, während Papieraußenschichten mittels eines Klebers hiermit verbunden sind, haben den Nachteil verhältnismäßig geringer Festigkeit und insbesondere nicht ausreichender Feuchtigkeits-Sperrwirkung.

Der Erfindung liegt die Aufgabe zugrunde, ein Verpackungsmaterial der eingangs genannten Art sowie ein Verfahren zu dessen Herstellung anzugeben, bei dem vollständige biologische Abbaubarkeit mit hoher Festigkeit und guter Feuchtigkeitsbeständigkeit kombiniert sind.

Erfindungsgemäß wird diese Aufgabe in Weiterbildung des Verpackungsmaterials der gattungsgemäßen Art dadurch gelöst, daß die Abdecklagen aus Deckfolien aus biologisch im wesentlichen vollständig abbaubarem Material bestehen.

Dabei kann vorgesehen sein, daß das die Innenschicht bildende Naturfaservlies aus Flachs, Jute, Sisal, Baumwolle oder Mischungen der vorgenannten Fasermaterialien besteht.

Die Erfindung sieht auch vor, daß das Naturfaservlies als non-woven-Material gefertigt ist.

Ferner schlägt die Erfindung vor, daß das Flächengewicht des Naturfaservlieses zwischen 100 g/m² und 2000 g/m² beträgt.

Die Erfindung sieht ferner vor, daß das Flächengewicht des Naturfaservlieses zwischen 300 g/m² und 800 g/m² beträgt.

Eine weitere Ausführungsform der Erfindung ist dadurch gekennzeichnet, daß die Deckfolien eine Dicke von 10 µm bis 100 µm aufweisen.

Alternativ hierzu kann vorgesehen sein, daß die Deckfolien eine Dicke von 20 µm bis 30 µm aufweisen.

Nach der Erfindung kann auch vorgesehen sein, daß mindestens eine der Deckfolien aus stärkehaltigem Material besteht.

Ferner schlägt die Erfindung vor, daß die Deckfolien auf die Innenschicht kleberfrei aufkaschiert sind.

Eine weitere Ausführungsform der Erfindung ist dadurch gekennzeichnet, daß auf mindestens eine der Deckfolien an der dem Naturfaservlies abgewandten Seite eine Papierschicht aufgebracht ist.

Die Erfindung sieht ferner vor, daß die Papierschicht(en) gemeinsam mit der angrenzenden Deckfolie auf die Innenschicht kleberfrei aufkaschiert ist/sind.

Das erfindungsgemäße Verfahren zum Herstellen eines flächigen Verpackungsmaterials der erfindungsgemäßen Art ist in einer ersten Ausführungsform dadurch gekennzeichnet, daß das Naturfaservlies beidseits mit je einer Deckfolie aus biologisch im wesentlichen vollständig abbaubarem Material sowie ggf. mindestens auf einer Seite mit einer daran anschließenden Papierschicht belegt und das so vorbereitete Paket in einem einzigen Formpreßvorgang unter Anwendung von Druck und Wärme zum Aufkaschieren der Deckfolien auf das Naturfaservlies sowie ggf. gleichzeitigem Aufkaschieren der Papierschicht(en) verpreßt wird.

Dabei kann vorgesehen sein, daß die Preßtemperatur 100°C - 200°C beträgt.

Nach der Erfindung kann auch vorgesehen sein, daß die Preßtemperatur ca. 150° beträgt.

Die Erfindung schlägt ferner auch vor, daß der spezifische Preßdruck 5 bis 50 bar beträgt.

Schließlich ist eine weitere Ausführungsform des Verfahrens nach der Erfindung dadurch gekennzeichnet, daß der spezifische Preßdruck 10 bis 20 bar beträgt.

Die Erfindung sieht auch vor, daß die Preßzeit 1 bis 30 Sekunden beträgt.

Vorgesehen ist ferner, daß die Preßzeit ca. 2 Sekunden beträgt.

Eine zweite Ausführungsform des Verfahrens nach der Erfindung zeichnet sich dadurch aus, daß das Naturfaservlies beidseits mit je einer Deckfolie aus biologisch im wesentlichen vollständig abbaubarem Material sowie ggf. mindestens auf einer Seite mit einer daran anschließenden Papierschicht belegt und die so vorbereitete Bahnenware in einem beheizten Walzenwerk unter Anwendung von Druck und Wärme zum Aufkaschiern der Deckfolie auf das Naturfaservlies sowie ggf. gleichzeitig zum Aufkaschieren der Papierschicht(en) verbunden wird.

Der Erfindung liegt die überraschende Erkenntnis zugrunde, daß es gelingt, ein Verpackungsmaterial aus Naturstoffen, welches vollständig biologisch abbaubar ist, zu schaffen, indem ein lockeres Naturfaservlies, welches ausschließlich die Aufgabe der Isolierung und Polsterung zu erfüllen hat, beidseits mit einer biologisch abbaubaren Deckfolie versehen wird, die ihrerseits aus einem Material besteht, welches hohe Zugkräfte aufnehmen und gleichzeitig das Naturfaservlies zuverlässig gegen Eindringen von Feuchtigkeit schützen kann.

Es hat sich gezeigt, daß die Deckfolien ohne Verwendung zusätzlicher Kleber durch Temperatur und Druck in einem einzigen Formpreßvorgang auf das an sich sehr lockere und mit lockerer Oberfläche versehene Naturfaservlies aufkaschiert werden können, ohne daß im Gebrauch Ablösungen der aufkaschierten Deckfolien erfolgen. Der Verbund kann im Vergleich zu einem reinen Naturfaservlies hohe Zugkräfte aufnehmen, wobei die Polsterwirkung des Naturfaservlieses jedoch vollständig erhalten bleibt. Gleichzeitig verhindern die Deckfolien ein allzu leichtes Durchstoßen des Verbundes, wie es z.B. ansonsten durch Kanten und kleine Radien an Verpakkungsteilen erfolgen kann. Die Deckfolien verhindern das schnelle Eindringen von Wasser in das Naturfaservlies sowie die Entwicklung von Staub aus der durch das Naturfaservlies gebildeten Fasermatte.

Wenn, wie dies eine besondere Ausführungsform der Erfindung vorsieht, gemeinsam mit den Deckfolien auf eine oder aber auf beide Seiten des Verbundes Papierschichten mit aufkaschiert werden, wirken die Deckfolien zusätzlich als flächiger Verklebungsfilm zu den Papierschichten hin, so daß auch bei dieser Ausführungsform die Verwendung von weiteren Klebemitteln nicht notwendig ist.

Das erfindungsgemäß verwendete reine Naturfaservlies nimmt durch seine offene Struktur sehr leicht Wasser auf und besitzt eine gute Speicherwirkung, so daß es an sich nicht in der Lage ist, das Verpackungsgut vor Wassereinwirkung, beispielsweise gegenüber Spritzwasser, zu schützen. Dies wird jedoch durch die erfindungsgemäß verwendeten biologisch abbaubaren aufkaschierten Deckfolien erreicht.

Das erfindungsgemäße Verpackungsmaterial hat gegenüber bekannten Verpackungsmaterialien dieser Art den Vorteil, daß es unter Anwendung von Druck und Wärme durch Tiefziehen oder Preßumformen verformt und dadurch dem Verpackungsgut angepaßt werden kann. Es ist außerdem möglich, ausschließlich durch Anwendung von Druck und Wärme Verpackungsmaterialien der erfindungsgemäßen Art miteinander zu verschweißen, wodurch beispielsweise leicht polsternde Säcke und dergleichen hergestellt werden können.

Das erfindungsgemäße Verpackungsmaterial hat ferner den Vorteil, daß es in einem sehr einfachen Kaschierprozeß ohne Zuhilfenahme weiterer Komponenten hergestellt werden kann, die anderenfalls die vollständige biologische Abbaubarkeit beeinträchtigen könnten. Durch die flächige Verbindung der Deckfolien mit dem Naturfaservlies, gegebenenfalls zusätzlich auch der Papierschichten, ist ein einfacher Zuschnitt zu den benötigten Konfektionsmaßen möglich, ohne daß weitere Verarbeitungsschritte, wie z.B. das Anbringen zusätzlicher Naht- oder Klebestellen, notwendig wären.

Weitere Merkmale und Vorteile der Erfindung ergeben sich aus der nachstehenden Beschreibung, in der Ausführungsbeispiele anhand der schematischen Zeichnung im einzelnen erläutert sind. Dabei zeigt:
- Fig. 1: ein erstes Ausführungsbeispiel eines Verpackungsmaterials nach der Erfindung im Schnitt senkrecht zur Verpackungsmaterialebene; und
- Fig. 2: in Fig. 1 entsprechender Darstellung ein zweites Ausführungsbeispiel eines Verpackungsmaterials nach der Erfindung.

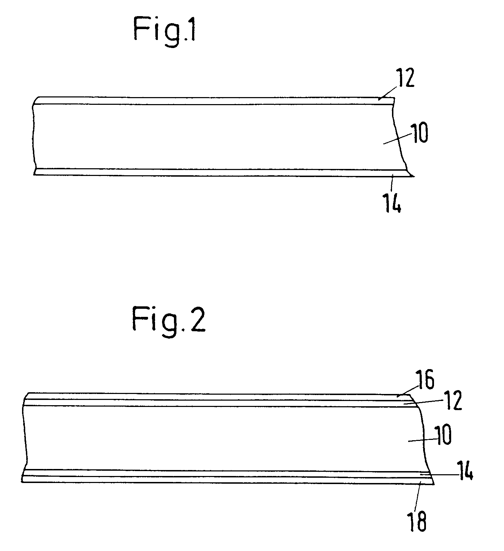

Wie Fig. 1 zeigt, besteht das Verpackungsmaterial bei dem dort gezeigten Ausführungsbeispiel aus einem Naturfaservlies 10, auf welches beidseits Deckfolien 12, 14 aus biologisch abbaubarem Material aufkaschiert sind. Das Naturfaservlies 10 besteht bei dem Ausführungsbeispiel von Fig. 1 aus Flachsfasern mit einem Flächengewicht von 200 g/m², während die Deckfolien 12, 14 Folien aus stärkehaltigem Material, nämlich zu ca. 60 % aus Stärke und im restlichen Bestandteil aus einem biologisch abbaubaren Polymeren bestehend, mit einer Dicke von 40 µm sind.

Bei dem in Fig. 2 gezeigten Ausführungsbeispiel, dessen Aufbau im übrigen demjenigen des Verpackungsmaterials von Fig. 1 entspricht, sind mit den Deckfolien 12, 14 auf das Naturfaservlies 10 beidseits Papierschichten 16, 18 aufkaschiert.

Die Herstellung des Verpackungsmaterials nach der Erfindung kann beispielsweise entsprechend den nachstehend beschriebenen Ausführungsbeispielen erfolgen.

### Beispiel 1:

Auf ein Naturfaservlies 10, bestehend aus einer Fasermatte aus einem Gemisch aus Flachs- und Sisalfasern mit einem Flächengewicht von 800 g/m², beziehbar durch die Firma FLEXI-Vlies, Memmingen, Bundesrepublik Deutschland, wurden beidseits als Deckfolien 12, 14 stärkehaltige Folien mit einer Dicke von 40 µm aufgelegt, beziehbar durch die Firma EMS-Chemie AG, CH-7013 Domst/Ems, Schweiz. Das vorbereitete Paket aus dem Naturfaservlies 10 und den Deckfolien 12, 14 wurde bei 150°C mit einem spezifischen Preßdruck von 10 bis 20 bar zwei Sekunden lang verpreßt. Das so hergestellte Verpackungsmaterial hatte eine ausgezeichnete Festigkeit bei guter Feuchtigkeits-Sperrwirkung sowie hervorragender Isolier- und Polsterwirkung.

### Beispiel 2:

Nach der Vorgehensweise von Beispiel 1 wurden als Naturfaservlies 10 eine Fasermatte aus Flachsfasern mit einem Flächengewicht von 200 g/m², beziehbar durch die Firma FLEXI-Vlies, Memmingen, Bundesrepublik Deutschland, sowie Deckfolien 12, 14 verpreßt, die aus stärkehaltigen Folien einer Dicke von 20 µm, beziehbar durch die Firma Montedison, bestanden. Das Ergebnis entsprach demjenigen von Beispiel 1.

### Beispiel 3:

Es wurde ein Paket vorbereitet aus einem Naturfaservlies 10, bestehend aus einer Fasermatte aus Flachsfasern mit einem Flächengewicht von 800 g/m², Hersteller Firma FLEXI-Vlies, Memmingen, Bundesrepublik Deutschland, aus zwei Deckfolien 12, 14, bestehend aus stärkehaltigen Folien einer Stärke von 40 µm, beziehbar durch die Firma EMS-Chemie AG, sowie zwei Papierschichten 16, 18, bestehend aus Schreibpapier mit einem Flächengewicht von 80 g/m². Das so vorbereitete Paket wurde bei 150°C und einem spezifischen Preßdruck von 10 bis 20 bar zwei Sekunden lang verpreßt. Es ergab sich ein Material mit hervorragenden Gebrauchseigenschaften entsprechend Beispiel 1 und Beispiel 2.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 10: Innenschicht
- 12: Deckfolie
- 14: Deckfolie
- 16: Papierschicht
- 18: Papierschicht

## Patentansprüche

1. Verpackungsmaterial mit einer flächigen, polsternden Innenschicht aus Naturfaservlies und zwei diese beidseits abdeckenden Abdecklagen, dadurch gekennzeichnet, daß die Abdecklagen aus Deckfolien (12, 14) aus biologisch im wesentlichen vollständig abbaubarem Material bestehen.

2. Verpackungsmaterial nach Anspruch 1, dadurch gekennzeichnet, daß das die Innenschicht (10) bildende Naturfaservlies aus Flachs, Jute, Sisal, Baumwolle oder Mischungen der vorgenannten Fasermaterialien besteht.

3. Verpackungsmaterial nach Anspruch 1 oder 2, dadurch gekennzeichnet, daß das Naturfaservlies (10) als non-woven-Material gefertigt ist.

4. Verpackungsmaterial nach einem der vorangehenden Ansprüche, dadurch gekennzeichnet, daß das Flächengewicht des Naturfaservlieses (10) zwischen 100 g/m² und 2000 g/m² beträgt.

5. Verpackungsmaterial nach Anspruch 4, dadurch gekennzeichnet, daß das Flächengewicht des Naturfaservlieses (10) zwischen 300 g/m² und 800 g/m² beträgt.

6. Verpackungsmaterial nach einem der vorangehenden Ansprüche, dadurch gekennzeichnet, daß die Deckfolien (12, 14) eine Dicke von 10 µm bis 100 µm aufweisen.

7. Verpackungsmaterial nach Anspruch 6, dadurch gekennzeichnet, daß die Deckfolien (12, 14) eine Dicke von 20 µm bis 30 µm aufweisen.

8. Verpackungsmaterial nach einem der vorangehenden Ansprüche, dadurch gekennzeichnet, daß mindestens eine der Deckfolien (12, 14) aus stärkehaltigem Material besteht.

9. Verpackungsmaterial nach einem der vorangehenden Ansprüche, dadurch gekennzeichnet, daß die Deckfolien (12, 14) auf die Innenschicht (10) kleberfrei aufkaschiert sind.

10. Verpackungsmaterial nach einem der vorangehenden Ansprüche, dadurch gekennzeichnet, daß auf mindestens eine der Deckfolien (12, 14) an der dem Naturfaservlies (10) abgewandten Seite eine Papierschicht (16, 18) aufgebracht ist.

11. Verpackungsmaterial nach Anspruch 10, dadurch gekennzeichnet, daß die Papierschicht(en) (16, 18) gemeinsam mit der angrenzenden Deckfolie (12, 14) auf die Innenschicht (10) kleberfrei aufkaschiert ist/sind.

12. Verfahren zum Herstellen eines flächigen Verpackungsmaterials nach einem der vorangehenden Ansprüche, dadurch gekennzeichnet, daß das Naturfaservlies beidseits mit je einer Deckfolie aus biologisch im wesentlichen vollständig abbaubarem Material sowie ggf. mindestens auf einer Seite mit einer daran anschließenden Papierschicht belegt und das so vorbereitete Paket in einem einzigen Formpreßvorgang unter Anwendung von Druck und Wärme zum Aufkaschieren der Deckfolien auf das Naturfaservlies sowie ggf. gleichzeitigem Aufkaschieren der Papierschicht(en) verpreßt wird.

13. Verfahren nach Anspruch 12, dadurch gekennzeichnet, daß die Preßtemperatur 100°C - 200°C beträgt.

14. Verfahren nach Anspruch 13, dadurch gekennzeichnet, daß die Preßtemperatur ca. 150°C beträgt.

15. Verfahren nach einem der Ansprüche 12 bis 14, dadurch gekennzeichnet, daß der spezifische Preßdruck 5 bis 50 bar beträgt.

16. Verfahren nach Anspruch 15, dadurch gekennzeichnet, daß der spezifische Preßdruck 10 bis 20 bar beträgt.

17. Verfahren nach einem der Ansprüche 12 bis 16, dadurch gekennzeichnet, daß die Preßzeit 1 bis 30 Sekunden beträgt.

18. Verfahren nach Anspruch 17, dadurch gekennzeichnet, daß die Preßzeit ca. 2 Sekunden beträgt.

19. Verfahren zum Herstellen eines flächigen Verpackungsmaterials nach einem der Ansprüche 1 bis 11, dadurch gekennzeichnet, daß das Naturfaservlies beidseits mit je einer Deckfolie aus biologisch im wesentlichen vollständig abbaubarem Material sowie ggf. mindestens auf einer Seite mit einer daran anschließenden Papierschicht belegt und die so vorbereitete Bahnenware in einem beheizten Walzenwerk unter Anwendung von Druck und Wärme zum Aufkaschieren der Deckfolie auf das Naturfaservlies sowie ggf. gleichzeitig zum Aufkaschieren der Papierschicht(en) verbunden wird.
